# EUROPEAN PATENT APPLICATION

(11) **EP 2 874 061 A1**
(43) Date of publication of application: **20.05.2015**
(21) Application number: 13306557.3
(22) Date of filing: 14.11.2013
(51) Int. Cl.: G06F 9/50

(54) **A method, a server and a system for distributed computing**

(71) Applicant: ALCATEL LUCENT, 92100 Boulogne-Billancourt (FR)
(72) Inventor: Klotsche, Ralf, 70435 Stuttgart (DE)
(74) Representative: Kröhnert, Michael

(57) **Abstract**

The invention concerns a first server (100) comprising
a first computing resource (101),
a processor (102) adapted to determine a load indicator, in particular an average load, of a distributed computing system depending on information about the load of the first computing resource (101), in particular load statistic data, and information about the load of at least a second computing resource (121), and adapted to detect when the load indicator exceeds a predetermined first threshold,
a sender (103) adapted to send a request for information about the load of the second computing resource (121) to a second server (120) comprising the second computing resource (121),
a receiver (104) adapted to receive the information about the load of the second computing resource (121), in particular load statistic data, in a response to the request,
wherein the sender (103) is adapted to send a request for activation of a new computing resource upon detecting that the load indicator exceeds the first threshold.

The invention concerns a system of server (100) and a respective method as well.

## Description

### Field of the invention

The invention relates to a method, a system and a server for automated collaborative resource control for a media cloud or distributed data center.

### Background

Media clouds or data centers comprise of a plurality of servers providing computing resources to the media cloud or data center depending on the demand. The computing resources are deployed for example by starting one further resource manually if some preconditions regarding the load of the system or the demand are fulfilled, e.g. when a user submits a request to a provider of a media cloud or a data center service. Optionally to handle fluctuations, for example daytime profiles are used to automate the activation of computing resources in heavy usage periods and deactivate computing resources in idle periods.

However, current automation processes can be made faster, more efficient and more reliable when handling highly volatile usage pattern.

### Summary

The object of the invention is thus to provide a highly reliable and robust automated resource control for distributed computing, e.g. in a media cloud or distributed data center.

The main idea of the invention is to use a first server comprising
a first computing resource,
a processor adapted to determine a load indicator, e.g. an average load, of a distributed computing system depending on information about the load of the first computing resource, in particular load statistic data, and information about the load of at least a second computing resource, and adapted to detect when the load indicator exceeds a predetermined first threshold,
a sender adapted to send a request for information about the second computing resource to a second server comprising the second computing resource,
a receiver adapted to receive the information about the load of the second computing resource, in particular load statistic data, in a response to the request,
wherein the sender is adapted to send a request for activation of a new computing resource upon detecting that the load indicator exceeds the first threshold.

Advantageously the processor is adapted to
detect when the load indicator falls below a second threshold, and
deactivate the first computing resource upon detecting that the average fell below the first threshold. This way unused resources are freed automatically, reducing energy consumption and cost likewise.

Advantageously the server comprises storage storing the first threshold or the second threshold and an interface adapted to modify the respective thresholds. This way the server is configurable easily and hence adding flexibility for operators.

Advantageously the processor is adapted to determine a random offset and the threshold depending on the random offset and a predetermined value. The random offset increases operability while maintaining robustness.

Advantageously the sender is adapted to select the second server from a plurality of servers depending on a predetermined criterion defining a subset of servers depending on the network topology, in particular distance, round trip delay time, number of nodes between the first server and second server. This limits the requests to servers that are within the region identified by the predetermined criterion the network topology. That way the reaction speed is increased and the servers may be limited to servers belonging to an specific operator.

Advantageously the receiver is adapted to receive a request for information about the load of the first computing resource, the processor is adapted to determine the requested information and the sender is adapted to send the requested information about the first computing resource in a response. This way one server is fully interoperable with other servers having the same features.

The invention also relates to a system of a plurality of such servers as well as a respective method.

Further developments of the invention can be gathered from dependent claims and the following description.

### Brief description of the figures

In the following the invention will be explained further making reference to the attached drawings.
Fig. 1 schematically shows a part of a distributed computing system, e.g. a media cloud or data center network.
Fig. 2 schematically shows a sequence diagram, showing some typical sequences within an automated collaborative resource control for a distributed computing system.
Fig. 3 schematically shows part of a server.

### Description of the embodiments

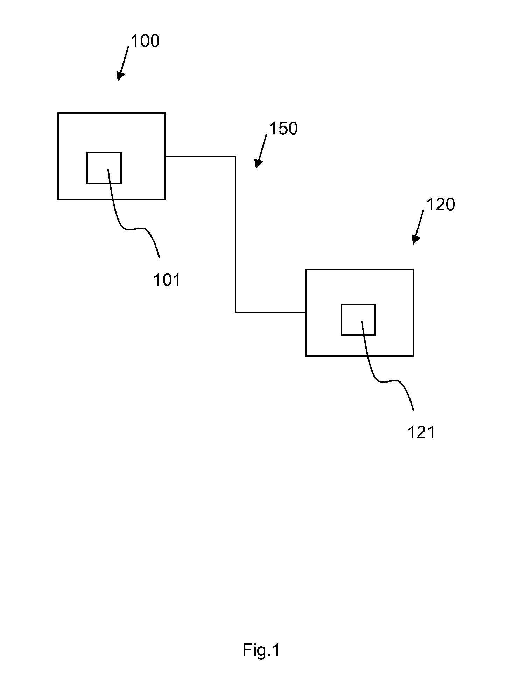

Fig. 1 schematically shows a part of a distributed computing system, e.g. a media cloud or data center network comprising a first server 100 and a second server 120. The network may comprise a plurality of servers 100, 120. Such plurality may be considered a swarm of servers that forms a media cloud or data center. Below such system is referred to as distributed computing system.

For example one of the servers comprises a SIP Gateway and the other servers comprise of various elements of an IP Multimedia Subsystem well known as IMS architecture. While some of the components, like the SIP Gateway, may be configured to be switched always on, except for maintenance, others may be activated or deactivated on by use basis, like additional routers that are used only in case of high demand and are switched off in case of little demand.

Physical components, e.g. CPU or I/O devices, may be switched on or off to scale the size of the distributed computing system and hence handle more load.

Likewise, components like virtual machines of a data center or media cloud may be switched on or off hence scaling the size of the cloud according to the need.

Such components of the distributed computing system are referred to as computing resources below. The servers using those resources may be adapted to turn such computing resources on or off depending on control commands. Such control commands are known to the person skilled in the art and not explained here in detail. Requesting a new computing resource to activate hence implies to send the corresponding control commands, e.g. according to the underlying operating system. For example Xen virtualization may be used. Wake up may be performed, in case of virtual machines via the overlaying operating system commands, e.g. well known from XEN or VMWare. When physical components are used instead of virtual machines, the well known wake on LAN may be used. In that case the servers comprise of the appropriate BIOS and network interface, e.g. using Advanced Power Management (well known as APM) and Advanced Configuration and Power Interface (well known as ACPI) respectively.

The network is adapted to connect the servers 100, 120. In the depicted part, the first server 100 is connected to the second server 120 via a data link 150.

The connection is for example via local area network (LAN), wireless local area network (WLAN, 802.11n) or wide area network (WAN). Said connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST) or session initiation protocol (SIP) or Internet Protocol Multimedia Subsystem (IMS). Addressing may be done using the well known uniform resource locators (URL), uniform resource identifiers (URI), names or namespaces of extensible markup language (XML Version 1.0, Third Edition, W3C Recommendation 8 December 2009).

The connection can but must not be directly between the devices. The typical use is on wide area networks with multiple intermediate devices where only the first server 100 and second server 120 are depicted in figure 1.

The first server 100 comprises a first computing resource 101; the second server 120 comprises a second computing resource 121. The first computing resource 101 or the second computing resource 121 is for example a physical element of the server, like an I/O card, a CPU or the like. Likewise the respective computing resources may be elements of a virtual machine corresponding to for example I/O cards or CPUs.

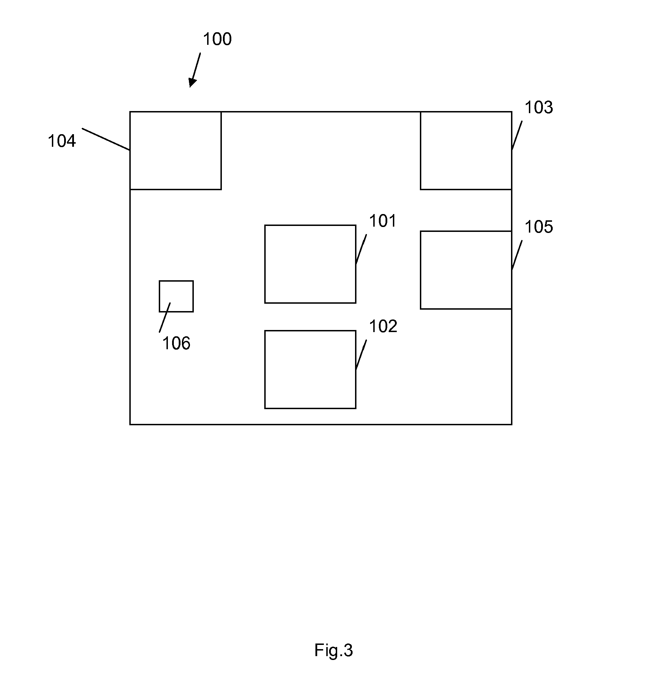

Fig. 3 schematically shows the first server 100. The first server 100 is adapted to provide all or parts of the functionality described below. The second server 120 comprises in the example identical components as the first server 100. Either server may comprise only parts of the described components as well as alternative or additional components.

The components comprise:
Aforementioned first computing resource 101 and a random number generator 106.
An optional storage 105 adapted to store at least temporarily a first threshold T1 and a second threshold T2.
An optional interface, not depicted, adapted to modify the respective thresholds T1, T2. The interface is for example implemented as SOAP interface.
A processor 102 adapted to determine information about the first computing resource 101, in particular load statistic data such as CPU load or I/O load and the like. In the example this is a first variable indicative of the load of the first computing resource 101, e.g. indicating the load in percent, e.g. normalized to maximum load, e.g. 100%.

The processor 102 is further adapted to determine a load indicator, e.g. an average load, of the distributed computing system depending on the first variable, in particular load statistic data indicative of the usage of the first computing resource 101, and information about the load of at least a second computing resource 121. The information about the load of the at least one second computing resource 121 is for example a second variable indicative of the load of the second computing resource 121. The second variable indicates the load in percent, e.g. normalized to maximum load, e.g. 100%. Load of a computing resource is measured for example by built in functions of an operating system and not further explained here.

Furthermore the processor 102 is adapted to detect when the load indicator exceeds the predetermined first threshold T1.

The processor 102 may further be adapted to detect when the load indicator falls below the second threshold T2.

In this case the processor 102 may be adapted to deactivate the first computing resource 101 upon detecting that the load indicator fell below the second threshold T2.

Furthermore the processor 102 may be adapted to determine the first threshold T1 and the second threshold T2 to comprise of a predetermined value V1, V2 and a random offset 01, 02 respectively.

The predetermined value V1, V2 is for example a load threshold, normalized to 100% load of the distributed computing system.

The first predetermined value V1 for example indicates an upper load threshold for requesting additional resource of 95%.

The second predetermined value V2 for example indicates a lower load threshold for triggering shutdown of the computing resource of 25%.

These values V1, V2 are provided for example to each of the servers 100, 120 of the distributed computing resource by an administrator.

In that case, the predetermined value V1, V2 may be stored and modified via the interface instead of the respective threshold T1, T2. Then the threshold may be calculated by the processor 102.

In the example the first threshold T1 is determined to be in the range between the first value V1, e.g. 95%, and the maximum, e.g. 100%.

In the example the second threshold T2 is determined to be in the range between the second value V2, e.g. 25%, and the minimum, e.g. 0%.

The random offset 01, 02 is determined by the random offset generator 106. In the example the first random offset 01 and the second random offset 02 is determined to a value between 0 and 5% and -25% and 0% respectively e.g. by appropriate normalization. Hence the sum of random offset and predetermined value results in a threshold T1, T2 within aforementioned range.

Alternatively to using a random offset, a predetermined fixed offset may be used. Preferrably not the same offset is used for each of the servers.

Furthermore the components comprise a sender 103 adapted to send a request for information about the second computing resource 121 to the second server 120 comprising the second computing resource 121. In the example the address of at least one second server 120 is determined. The address is in the example determined from a list comprising IP addresses of at least one second server 120. The list is for example stored in storage 105 by an administrator.

Advantageously the sender 103 is adapted to select the second server 120 from a plurality of, in particular interconnected, servers, in the example from the list, depending on a predetermined criterion. The criterion is for example defining a subset of servers depending on the network topology. To that end for example distance between servers, round trip delay time between servers, number of nodes between servers are used. The criterion in that case is for example that the distance, the round trip delay time or the number of nodes is below a respective threshold.

This way a region is defined within the network topology. The list is for example dynamically created and updated automatically according to the well known Neighbor Discovery Protocol. The list may be static and programmed by an administrator via the interface as well.

Furthermore the sender 103 is adapted to send a request for activation of a new computing resource upon detecting that the load indicator exceeds the first threshold T1.

The addresses used to communicate are available at the first server 100, e.g. via a list of additional resources, e.g. a list of IP addresses for additional resources. The list is for example stored in the storage 105 by the administrator or automatically updated via an appropriate process using the interface described above for the list of addresses of second servers 121.

In a preferred embodiment the list comprises the address of a master controller, e.g. controlling the distributed computing system. In this case only one address may be stored and the master controller manages a repository of additional new computing resources.

Alternatively or additionally the list comprises the address of at least one second server 120 adapted to respond to a request for a new computing resource directly. This way the list on the first server 100 is the repository of new computing resources.

Furthermore the components comprise a receiver 104 adapted to receive the information about the second computing resource 121, in particular load statistic data of the second computing resource 121, e.g. I/O or CPU load in percent of maximum load, in a response to the request. This information is for example aforementioned second variable.

By using random offsets for each case an individual first and second threshold is easily determined for each first server 100 of the distributed computing system. In the distributed computing system this leads to different response times for different servers, because thresholds vary randomly in the swarm of multiple servers of the media cloud or data center.

While individual servers 100, 120 can effectively operate as two point controllers, this causes the swarm of servers to operate similar to a PID controller regarding the control of the overall resource and load of the media cloud or data center.

In order to provide the same functionality within the swarm of servers, the individual servers may comprise of components to send requests for actual load values, to report their actual load statistic data, e.g. values of CPU or I/O load, and to trigger either their own shutdown or to request activation of an additional resource.

In this case the receiver 104 may be adapted to receive the request for information about the first computing resource 101 the processor 102 is adapted to determine the requested information as describe above and the sender 103 is adapted to send the requested information about the first computing resource 101 in a response, e.g. using aforementioned second variable.

As described above, requests for activation of a new computing resource may be sent directly to servers of the swarm, media cloud or data center that are idle, or via a master controller having information about the swarm, media cloud or data center. According to an example either the corresponding server receiving the request directly starts an additional physical component, e.g. via wake on LAN, or a virtual component via a virtual machine, or the master controller triggers the start of an additional physical component or a virtual component of a virtual machine upon receipt of the request.

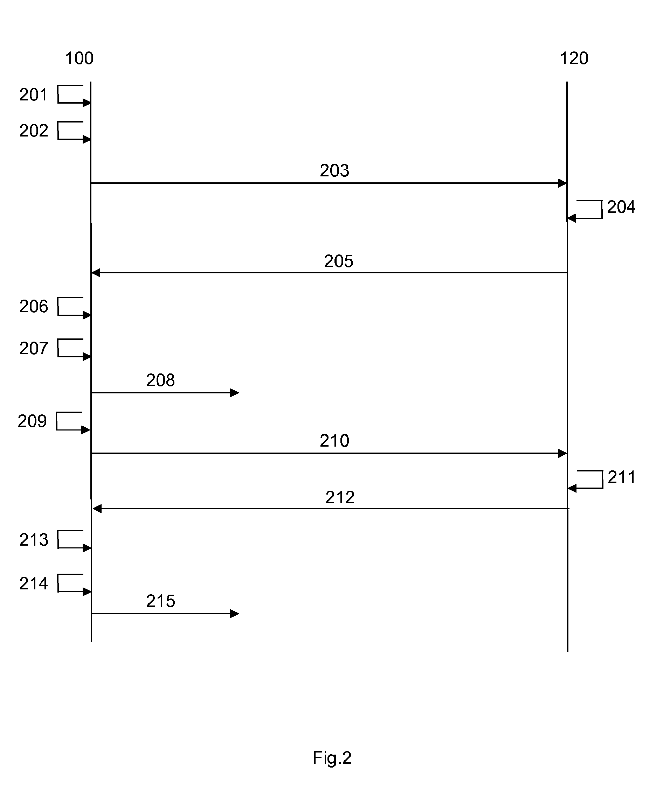

Fig. 2 schematically shows a sequence diagram, showing some typical sequences within an automated collaborative resource control.

The control for example starts whenever the first server 100 is started. The sequences are for example repeated every second. The order of sequences may vary or some parts of the sequence are repeated less or more frequently than other.

In the example below the first server 100 and the second server 120 are described. Typically in the distributed computing system a plurality of servers, i.e. a swarm of servers, is used in the media cloud or data center. In that case the sequences described below or similar sequences are used between the servers belonging to the swarm, media cloud or data center. This means that each of the servers of the swarm, media cloud or data center is communicating with a plurality of other servers. That way a robust automated collaborative resource control is achieved. The example uses resource load as control variable. Any other type of resource characteristic such as idle time or memory usage may be used as well. In that case corresponding components of the servers are adapted to process such data.

In the example the computing resources 101, 121 are considered to be physical central processing units (CPU) and hence the information about them is the CPU load in percent of their maximum available load (100%).

In the sequence, in a step 201 the first threshold T1 and the second threshold T2 is determined from the predetermined first value V1 and the predetermined second value V2 respectively using the first random offset 01 and the second random offset 02 respectively. To that end the predetermined values V1, V2 are read, e.g. from storage 105, the random offsets 01, 02 are determined using the random number generator 106 and the thresholds T1, T2 are calculated by adding them to the respective predetermined value V1, V2. As described above the predetermined values V1, V2 and the random offsets 01, 02 are calculated in the example to the first threshold T1 between 95% and maximum load (100%) of the distributed computing system and the second threshold T2 between 25% and minimum load (0%) of the distributed computing system. In the example the load refers to the average CPU load of the distributed computing system. This step may be performed frequently, e.g. every 1 second or only once after the first server 100 starts. Optionally the resulting thresholds T1, T2 may be stored at least temporarily on the storage 105. In that case step 201 may comprise of reading the thresholds T1, T2 from storage 105 after calculating them once.

Afterwards in a step 202, the first variable, indicative of the load of the first computing resource 101 of the first server 100 is determined. According to the example the CPU load of the CPU of the first server 100 is determined.

Afterwards the request for information about the load of the second computing resource 121 is sent in a message 203 to the second server 120. To that end the second server 120 is selected from the plurality of, in particular interconnected, servers depending on the predetermined criterion defining the subset of servers depending on the network topology. As described above in particular distance, round trip delay time, number of nodes between the first server 100 and the second server 120 are used to determine which server to send message 203 to.

Preferably the message 203 is sent to a plurality of second servers 120, e.g. in order that their respective addresses are stored in aforementioned list of IP addresses. In an example where the addresses of the second servers 120 are stored in the list in the order of their distance to the first server 100 in terms of round trip delay time, message 203 is sent to the 70 second servers 120 closest to the first server 100 in terms of round trip delay time by sending them to the first 70 second servers 120. This information is determined as describe above in the example from the list of IP addresses sorted according to round trip delay times.

Upon receipt of the message 203, i.e. the request for information about the load of the second computing resource 121, the requested information is determined, e.g. as aforementioned second variable. This is in the example processed on the second server 120.

To that end in a step 204 the information about the second computing resource 121, in particular the load statistic data, is determined. According to the example the CPU load of the CPU of the second server 120 is determined as described above as percentage value of the maximum of the CPU of the second computing resource 121 in the second variable.

These steps may be performed frequently, e.g. every second

Afterwards the requested information about the second computing resource 121 is sent in a response 205. In the example the response comprises the second variable.

Upon receipt of response 205, i.e. the information about the load of the second computing resource 121 in response to the request 203, the average load of the distributed computing system is determined in a step 206 depending on information about the load of the first computing resource 101 and information about the load of at least the second computing resource 121. The load indicator is in the example determined as average, e.g. arithmetic mean, of the individual CPU load values. In the example of the first server 100 and one second server 120, the average of the first variable and the second variable may be used. Alternatively other mean values such as median or moving average may be used as well.

Afterwards a test is performed in a step 207 to detect when the load indicator exceeds the predetermined first threshold T1.

Upon detecting that the load indicator exceeds the first threshold T1 the request for activation of a new computing resource is sent in message 208.

Preferably, when as described above the request message 203 is sent to a plurality of second servers 120, step 206 comprises of waiting for the response of a predetermined amount of second servers 120 and determining whether to request the activation of a new computing resource in message 208 depending on a plurality of responses. For example when from the aforementioned 70 requests 50 responses have been received, the load indicator is determined, compared to the first threshold and when applicable the message 208 is sent.

In this case more second servers 120 respond and their respective second variables are determined, transmitted and used for determining the load indicator.

The message 208 preferably is sent only to one specific second server 120 or master controller. This is to avoid oscillation in the system..

Message 208 is sent in the example as described above using the list of IP addresses. Message 208 is sent in the example to a corresponding server or the master controller. In the first case, the IP addresses are mapped in the list to information indicating the priority of the respective servers, e.g. from the order in the list. This means that a server at the beginning of the list is the first candidate to request the activation of the new computing resource. In the latter case the master controller tracks such information.

Optionally or alternatively the components and the sequnce may be adapted as described below.

The first server 100 may be adapted to detect in a step 209 when the load indicator falls below the second threshold T2. This indicates that the distributed computing system is not optimally used and the first server 100 may be a candidate to deactivate.

Upon detection that the load indicator falls below the second threshold T2, a message 210, requesting information about the second computing resource 121, is sent to the second server 120.

Preferably the message 210 is sent to a plurality, e.g. 70 second servers 120 of the swarm, media cloud or data center.

Upon receipt of message 210 in a step 211, the load of the second computing resource 121, in the example the CPU load of the second server 120 is determined. In the example aforementioned second variable is determined.

Afterwards the requested information about the second computing resource 121, in the example the CPU load, is sent in a message 212, response, from the second server 120 to the first server 100. In the example aforementioned second variable is sent.

Upon receipt of message 212 the load indicator is determined in a step 213 as described above.

Afterwards a test is performed in a step 214 to determine when the load indicator falls below the second threshold T2. This indicates that the distributed computing system is still not optimally used.

Upon detection of this case, the first computing resource 101 is triggered to shut down. The shutdown may be immediately or following a delay, e.g. a graceful shutdown waiting for all running processes to stop but not accepting new process requests. In case the computing resource in question is used for a process that may not be shut down, shutdown may be prohibited in this step either.

Optionally in a message 215 the second servers 120 or the master controller is informed about this shut down.

Preferably, when as described above the request message 210 is sent to a plurality of second servers 120, step 213 comprises of waiting for the response of a predetermined amount of second servers 120 and determining whether to shut down the first computing resource 101 or not depending on several of the responses. The load indicator is then determined for example when a predetermined amount of second servers 120, e.g. 25 out of 70 requests sent, reported their load, e.g. in the second variable.

The processing of the second variable may be performed on the second server 120 as well, when the information about the first threshold T1 or the second threshold T2 is transmitted in the request. In that case the individual load of a second server 120 is compared to the first threshold T1 or the second threshold T2 of the requesting first server 101. In the first server 100 this replaces the steps of determining the load indicator and comparing it to the first threshold T1 or the second threshold T2 with a test to determine if a predetermined amount of second servers 120 report to exceed the first threshold T1 or to fall below the second threshold T2. To that end the second servers 120 respond with a TRUE or FALSE indication of whether the first threshold T1 is exceeded or not or whether the load indicator fell below the second threshold T2 or not.

In an example, in case that 50 of 70 second servers 121 report to exceed the first threshold T1, the message 208 is sent to request a new resource. In another example in case 50 of 70 second servers 121 report to have load below the second threshold T2, the first server is shut down.

In an optional step the first server 100 may receive a request to modify the respective thresholds T1, T2 and send a message to prompt via an interface for user input as describe above. In that case in an additional step the values may be stored on the first server 100.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the sequence diagram represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A first server (100) **comprising**
a first computing resource (101),
a processor (102) adapted to determine a load indicator, in particular an average load, of a distributed computing system depending on information about the load of the first computing resource (101), in particular load statistic data, and information about the load of at least a second computing resource (121), and adapted to detect when the load indicator exceeds a predetermined first threshold (T1),
a sender (103) adapted to send a request for information about the load of the second computing resource (121) to a second server (120) comprising the second computing resource (121),
a receiver (104) adapted to receive the information about the load of the second computing resource (121), in particular load statistic data, in a response to the request,
wherein the sender (103) is adapted to send a request for activation of a new computing resource upon detecting that the load indicator exceeds the first threshold (T1).

2. The server (100) according to claim 1, wherein the processor (102) is adapted to
detect when the load indicator falls below a second threshold (T2) and
deactivate the first computing resource (101) upon detecting that the average fell below the second threshold (T2).

3. The server (100) according to claim 1 or 2, comprising storage (105) storing the first threshold (T1) or the second threshold (T2) and an interface adapted to modify the respective thresholds (T1, T2).

4. The server (100) according to claim 1 to 3, wherein the processor (102) is adapted to determine a random offset (01, 02) and the threshold (T1, T2) depending on the random offset (01, 02) and a predetermined value (V1, V2).

5. The server (100) according to claims 1 to 4, wherein the sender (103) is adapted to select the second server (120) from a plurality of, in particular interconnected, servers depending on a predetermined criterion defining a subset of servers depending on the network topology, in particular distance, round trip delay time, number of nodes between the first server (100) and second server (120).

6. The server (100) according to claims 1 to 5, wherein the receiver (104) is adapted to receive a request for information about the first computing resource (101), the processor (102) is adapted to determine the requested information and the sender (103) is adapted to send the requested information about the first computing resource (101) in a response.

7. A system of servers **comprising** of a plurality of servers (100) according to claims 1 to 6.

8. A method **comprising**
determining a load indicator, in particular an average load, of a distributed computing system depending on information about the load of a first computing resource (101) of a first server (100), in particular load statistic data, and information about the load of at least a second computing resource (121),
detecting when the load indicator exceeds a predetermined first threshold (T1),
sending a request for information about the second computing resource (121) to a second server (120) comprising the second computing resource (121),
receiving the information about the load of the second computing resource (121), in particular load statistic data, in a response to the request, and
sending a request for activation of a new computing resource upon detecting that the load indicator exceeds the first threshold (T1).

9. The method to claim 8, comprising
detecting when the load indicator falls below a second threshold (T2), and
deactivating the first computing resource (101) upon detecting that the load indicator fell below the second threshold (T2).

10. The method according to claim 8 or 9, comprising storing the first threshold (T1) or the second threshold (T2) and
prompting via an interface to modify the respective thresholds (T1, T2).

11. The method according to claim 8 to 10, comprising determining a random offset (O1, O2) and the threshold (T1, T2) depending on the random offset (O1, O2) and a predetermined value (V1, V2).

12. The method according to claims 8 to 11, comprising selecting the second server (120) from a plurality of, in particular interconnected, servers depending on a predetermined criterion defining a subset of servers depending on the network topology, in particular distance, round trip delay time, number of nodes between the first server (100) and second server (120).

13. The method according to claims 8 to 12, comprising receiving a request for information about the load of the first computing resource (101),
determining the requested information, in particular load statistic data, and
sending the requested information about the first computing resource (101) in a response.

## Amended claims

### Amended claims in accordance with Rule 137(2) EPC.

1. A first server (100) **comprising**
a first computing resource (101),
a processor (102) adapted to determine a load indicator of a distributed computing system depending on information about the load of the first computing resource (101) and information about the load of at least a second computing resource (121), and adapted to detect when the load indicator exceeds a predetermined first threshold (T1),
a sender (103) adapted to send a request for information about the load of the second computing resource (121) to a second server (120) comprising the second computing resource (121),
a receiver (104) adapted to receive the information about the load of the second computing resource (121) in a response to the request,
wherein the sender (103) is adapted to send a request for activation of a new computing resource upon detecting that the load indicator exceeds the first threshold (T1), **characterized in that** the processor (102) is adapted to determine a random offset (O1, O2) and the threshold (T1, T2) depending on the random offset (O1, O2) and a predetermined value (V1, V2).

2. The server (100) according to claim 1, wherein the processor (102) is adapted to
detect when the load indicator falls below a second threshold (T2) and
deactivate the first computing resource (101) upon detecting that the average fell below the second threshold (T2).

3. The server (100) according to claim 1 or 2, comprising storage (105) storing the first threshold (T1) or the second threshold (T2) and an interface adapted to modify the respective thresholds (T1, T2).

4. The server (100) according to claims 1 to 4, wherein the sender (103) is adapted to select the second server (120) from a plurality of servers depending on a predetermined criterion defining a subset of servers depending on the network topology.

5. The server (100) according to claims 1 to 4, wherein the receiver (104) is adapted to receive a request for information about the first computing resource (101), the processor (102) is adapted to determine the requested information and the sender (103) is adapted to send the requested information about the first computing resource (101) in a response.

6. A system of servers **comprising** of a plurality of servers (100) according to claims 1 to 5.

7. A method **comprising**
determining a load indicator of a distributed computing system depending on information about the load of a first computing resource (101) of a first server (100) and information about the load of at least a second computing resource (121),
detecting when the load indicator exceeds a predetermined first threshold (T1),
sending a request for information about the second computing resource (121) to a second server (120) comprising the second computing resource (121),
receiving the information about the load of the second computing resource (121) in a response to the request, and
sending a request for activation of a new computing resource upon detecting that the load indicator exceeds the first threshold (T1), **characterized by** determining a random offset (O1, O2) and the threshold (T1, T2) depending on the random offset (O1, O2) and a predetermined value (V1, V2).

8. The method to claim 7, comprising
detecting when the load indicator falls below a second threshold (T2), and
deactivating the first computing resource (101) upon detecting that the load indicator fell below the second threshold (T2).

9. The method according to claim 7 or 8, comprising
storing the first threshold (T1) or the second threshold (T2) and
prompting via an interface to modify the respective thresholds (T1, T2).

10. The method according to claims 7 to 9, comprising selecting the second server (120) from a plurality of servers depending on a predetermined criterion defining a subset of servers depending on the network topology.

11. The method according to claims 7 to 10, comprising
receiving a request for information about the load of the first computing resource (101),
determining the requested information, in particular load statistic data, and
sending the requested information about the first computing resource (101) in a response.
